Europäisches Patentamt

European Patent Office

Office européen des brevets

(11) Numéro de publication : **0 428 702 B1**

(12) **FASCICULE DE BREVET EUROPEEN**

(45) Date de publication du fascicule du brevet :
**24.02.93 Bulletin 93/08**

(21) Numéro de dépôt : **90909748.7**

(22) Date de dépôt : **13.06.90**

(86) Numéro de dépôt international :
**PCT/FR90/00421**

(87) Numéro de publication internationale :
**WO 90/15969 27.12.90 Gazette 90/29**

(51) Int. Cl.⁵ : **G01D 5/26**

(54) **APPAREIL OPTO-ELECTRONIQUE DE MESURE A DISTANCE D'UNE GRANDEUR PHYSIQUE.**

(30) Priorité : **14.06.89 FR 8907856**

(43) Date de publication de la demande :
**29.05.91 Bulletin 91/22**

(45) Mention de la délivrance du brevet :
**24.02.93 Bulletin 93/08**

(84) Etats contractants désignés :
**AT BE CH DE DK ES FR GB IT LI LU NL SE**

(56) Documents cités :
**WO-A-87/05691**
**GB-A- 2 202 936**
**Patent Abstracts of Japan, vol. 9, No. 93**
**(P-351)(1816), 23 April 1985 & JP-A-59221618**
**The International Congress on Optical**
**Science & Engineering, 12-15 March 1990, La**
**Haye, Conf. 1267, Paper 1267-39,Session 5, M.**
**Lequine et al.: "A dual-wavelength passive**
**homodyne detection unit for fiber-coupled**
**white-light interferometers"**

(73) Titulaire : **BERTIN & CIE**
**Zone Industrielle Boîte postale 3**
**F-78373 Plaisir Cédex (FR)**

(72) Inventeur : **LEQUIME, Michel**
**6, rue des Sauries**
**F-13510 Eguilles (FR)**
Inventeur : **LECOT, Catherine Le Mail de la**
**Frescaile**
**3, allée Ph.-Brocard**
**F-13127 Vitrolles (FR)**
Inventeur : **GIOVANNINI, Hugues**
**38, rue d'Orient**
**F-13010 Marseille (FR)**

(74) Mandataire : **Ramey, Daniel**
**Cabinet Ores 6 Avenue de Messine**
**F-75008 Paris (FR)**

EP 0 428 702 B1

## Description

L'invention concerne un appareil opto-électronique de mesure à distance d'une grandeur physique, cet appareil étant du type comprenant une source de lumière, un capteur soumis à la grandeur physique à mesurer et réalisant une modulation spectrale du flux lumineux reçu de la source, à une fréquence fonction de la grandeur physique à mesurer, ainsi que des moyens d'analyse du flux lumineux transmis par le capteur, permettant de déterminer la valeur de la grandeur physique à mesurer à partir de la fréquence de modulation spectrale du flux lumineux transmis par le capteur.

On connaît déjà, par exemple du document WO-A-87/05691, des procédés et dispositifs de ce type, dans lesquels on utilise des capteurs comprenant des éléments biréfringents sensibles à la grandeur à mesurer. Les moyens d'analyse comprennent en général un interféromètre démodulateur accordé sur le capteur et permettant par exemple d'analyser une modulation caractéristique d'une fréquence de battement entre la modulation spectrale due au capteur et celle due à l'interféromètre démodulateur.

L'invention a pour objet un appareil de mesure à distance d'une grandeur physique, utilisant des moyens du type précité, c'est-à-dire un capteur sensible à la grandeur physique à mesurer, réalisant une modulation spectrale du flux lumineux transmis à une fréquence qui est fonction de la valeur de la grandeur à mesurer, et des moyens d'analyse qui soient statiques, compacts et extrêmement précis.

L'invention a également pour objet un appareil de ce type, dans lequel les moyens d'analyse permettent d'obtenir la phase absolue du signal lumineux transmis par le capteur.

L'invention a encore pour objet un appareil du type précité, permettant le multiplexage de capteurs de même type où de types différents, situés dans une même zone ou dans des zones différentes.

L'invention propose, à cet effet, un appareil opto-électronique de mesure à distance d'une grandeur physique, comprenant une source de lumière, un capteur soumis à la grandeur physique à mesurer et réalisant une modulation spectrale périodique du flux lumineux reçu de la source, à une fréquence fonction de la grandeur physique à mesurer, et des moyens d'analyse du flux lumineux transmis par le capteur, ces moyens d'analyse comportant un élément biréfringent accordé sur le capteur et produisant une différence de marche optique proche de celle produite par le capteur, caractérisé en ce que les moyens d'analyse sont du type statique et comprennent des cubes séparateurs de polarisation associés à des photodétecteurs, et des moyens de traitement de l'information reliés aux photodétecteurs pour le calcul et la détermination de la phase modulo $2\pi$ du signal d'analyse transmis par l'élément biréfringent des moyens d'analyse, et en ce que l'appareil comprend deux sources de lumière émettant des flux lumineux centrés sur des longueurs d'ondes différentes, et des moyens de commande de fonctionnement alterné de ces deux sources de lumière, la différence des longueurs d'onde centrales des deux sources de lumière étant telle que la valeur absolue de la différence des phases des signaux transmis par l'élément biréfringent reste inférieure à $\pi$ pour une gamme déterminée de valeurs de la grandeur physique à mesurer.

Les cubes séparateurs de polarisation qui sont traversés par le flux lumineux issu du capteur, donnent (à des coefficients près ) des signaux du type :

$1 \pm \cos \varphi$ et/ou $1 \pm \sin \varphi$, à partir desquels on peut déterminer la phase du signal modulo $2\pi$; cette indétermination de $2k\pi$ peut être levée grâce à l'utilisation en alternance de deux sources de lumière dont les longueurs d'onde centrales sont relativement proches l'une de l'autre. De cette façon, la différence de phase des signaux correspondant à ces deux sources de lumière, pour une même valeur de la grandeur physique à mesurer, reste inférieure à $2\pi$ et la mesure de cette différence de phase permet de lever l'indétermination de $2k\pi$ sur la détermination de la phase absolue du signal issu du capteur. La connaissance de la valeur de la phase absolue permet de déterminer la fréquence de modulation spectrale introduite par le capteur, et donc, moyennant un étalonnage, de déterminer la valeur de la grandeur physique à mesurer.

Les moyens d'analyse sont donc entièrement statiques et ne comprennent pas d'éléments mobiles, et peuvent an outre être réalisés sous une forme particulièrement compacte.

Selon un mode de réalisation préféré de l'invention, les moyens d'analyse comprennent successivement, par rapport au sens de propagation du flux lumineux transmis par le capteur, un premier cube séparateur de polarisation transmettant sur deux voies d'analyse deux signaux lumineux polarisés dans des plans perpendiculaires; l'élément biréfringent précité, qui est placé sur les deux voies d'analyse; une lame quart d'onde placée sur une seule des voies d'analyse ; deux cubes séparateurs de polarisation placés chacun sur une voie d'analyse; et quatre photodétecteurs, placés chacun sur l'une des sorties de ces deux cubes séparateurs.

Cet agencement permet d'obtenir, sur les quatre photodétecteurs, des signaux qui sont, à des coefficients près, du type $1 + \cos \varphi$ , $1 - \cos \varphi$ , $1 + \sin \varphi$ , $1 - \sin \varphi$ , partir desquels on peut simplement déterminer la phase modulo $2\pi$ du signal transmis par le capteur et par l'élément biréfringent des moyens d'analyse. De plus, l'élément biréfringent est commun pour les deux voies d'analyse et les moyens d'analyse travaillent sur la totalité du flux lumineux transmis par le capteur, puisqu'on utilise les deux états de polarisation de ce flux

2

lumineux.

De préférence, chaque cube séparateur de polarisation précité est associé à un second cube séparateur de polarisation, placé sur l'une de ses sorties, de telle sorte que les flux lumineux sortant l'un directement du premier cube séparateur, l'autre du second cube séparateur, sont parallèles et orientés dans le même sens.

Il en résulte que les quatre photodétecteurs peuvent être disposés sur une même ligne, ce qui facilite leur montage sur un circuit imprimé ou sur une embase commune de régulation thermique.

Selon une autre caractéristique préférée de l'invention, la lame quart d'onde précitée est achromatique.

On peut ainsi mesurer réellement le sinus et le cosinus de la phase du signal lumineux en un même point de l'enveloppe de ce signal, et non en des points différents. La précision et la linéarité de la mesure s'en trouvent grandement améliorées.

Selon encore une autre caractéristique préférée de l'invention, l'élément biréfringent faisant partie des moyens d'analyse est insensible aux variations de température et a une très faible dépendance spectrale.

De préférence, cet élément biréfringent est formé de deux lames accolées, dont les axes lents et rapides sont croisés.

Avantageusement, ces deux lames sont constituées de KDP et de calcite respectivement.

Les sources de lumière utilisées dans l'appareil selon l'invention peuvent être des diodes électroluminescentes ou superluminescentes (encore appelées superradiantes) qui sont associées à des circuits de régulation thermique, ou bien elles peuvent comprendre une source lumineuse commune à spectre large, par exemple une lampe à filament ou une lampe à arc, et des filtres interférentiels pour la transmission de deux longueurs d'onde prédéterminées, ainsi que des moyens spécifiques de régulation de la température de ces filtres.

L'appareil selon l'invention comprend de préférence encore un circuit de calibrage, comportant une voie de liaison directe entre les sources de lumière et les moyens d'analyse, une voie de liaison entre un capteur étalon et les moyens d'analyse, et des obturateurs montés sur ces deux voies et sur la voie de mesure allant du capteur de mesure aux moyens d'analyse.

L'invention est par ailleurs bien adaptée au multiplexage de plusieurs capteurs. Par exemple, l'appareil selon l'invention peut comprendre plusieurs capteurs montés en parallèle, ayant des fréquences différentes de modulation spectrale du flux lumineux qu'ils transmettent, et autant de moyens d'analyse qui sont montés en parallèle et comprennent chacun un élément biréfringent accordé sur un capteur correspondant, les capteurs étant reliés aux moyens d'analyse par une fibre optique commune et des coupleurs optiques.

En variante, plusieurs capteurs ayant des fréquences différentes de modulation spectrale peuvent être montés en parallèle et reliés à des moyens communs d'analyse par des coupleurs optiques et une fibre optique commune, les moyens d'analyse comprenant alors un ensemble d'éléments biréfringents qui est susceptible d'être accordé sur chaque capteur successivement.

Selon une autre variante, les moyens d'analyse peuvent être reliés par une fibre optique commune à des capteurs qui sont éloignés les uns des autres de distances telles que l'on puisse séparer dans le temps les signaux provenant de ces capteurs durant des intervalles de mesure définis par les durées d'impulsions lumineuses émises par les sources de lumière.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :

- la figure 1 représente schématiquement un appareil selon l'invention;
- la figure 2 représente schématiquement le circuit de calibrage de cet appareil;
- les figures 3 et 4 représentent deux modes de multiplexage de capteurs dans un appareil selon l'invention;
- les figures 5, 6 et 7 représentent des ensembles de lames biréfringentes;
- la figure 8 représente un autre mode de multiplexage de capteurs.

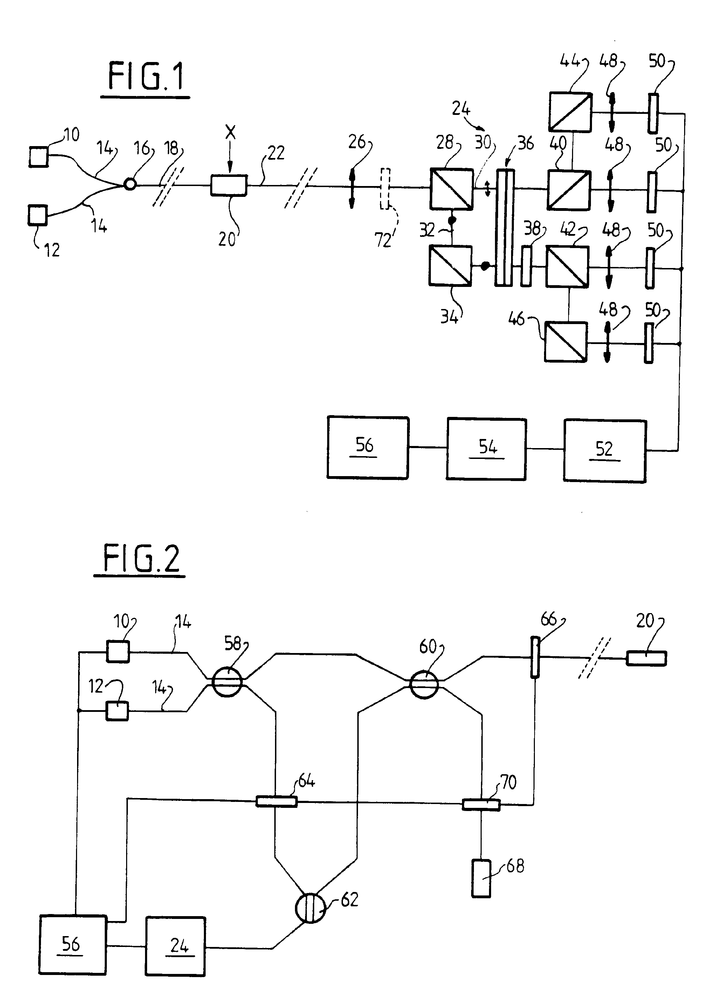

On se réfère d'abord à la figure 1, qui représente schématiquement la structure d'un appareil optoélectronique de mesure à distance d'une grandeur physique, selon l'invention.

Cet appareil comprend deux sources de lumière 10 et 12 émettant des flux lumineux dont les longueurs d'onde centrales sont relativement proches l'une de l'autre (par exemple telles que $\wedge = \frac{\lambda 1 \cdot \lambda 2}{\lambda 1 - \lambda 2} \simeq 10 - 50\mu m$) et dont les largeurs spectrales vérifient la relation :

$$\Delta o > \frac{k, \lambda^2}{\Delta \lambda}, \text{ soit } \Delta \lambda > \frac{k.\lambda^2}{\Delta o}$$

où $\Delta o$ est la différence de marche générée dans l'élément biréfringent des moyens d'analyse, et k est un nombre entier compris entre 2 et 5.

Les sources de lumière 10 et 12 sont reliées par des fibres optiques 14 et un coupleur en Y 16 à une fibre

3

EP 0 428 702 B1

optique commune 18 qui peut avoir une grande longueur et qui aboutit à un capteur 20 de type interférométrique, qui comprend un élément sensible soumis à la grandeur physique X à mesurer.

Le capteur est relié par une fibre optique 22 à des moyens d'analyse 24.

Ces moyens d'ananalyse comprennent une optique 26 au foyer de laquelle est placée l'extrémité de la fibre optique 22, et qui fournit un faisceau de lumière à faible divergence à un premier cube séparateur de polarisation 28 à deux sorties, dont l'une 30 transmet un signal lumineux polarisé dans le plan du dessin et l'autre 32 un signal lumineux polarisé perpendiculairement à ce plan. Cette sortie 32 arrive sur un autre cube séparateur de polarisation 34, identique au cube 28 et orienté de la même façon, qui reçoit le signal lumineux transmis par la sortie 32 et le réfléchit dans une direction perpendiculaires, c'est-à-dire parallèlement à la sortie 30 et dans le même sens que celle-ci.

A la sortie des cubes séparateurs 28 et 34 est disposé un élément biréfringent 36 dont les axes sont orientés à 45° des axes de polarisation des signaux lumineux. Cet élément biréfringent 36 est traversé par les signaux lumineux sortant des cubes 28 et 34, et introduit dans ces signaux une différence de marche optique qui est fonction de son épaisseur et de sa biréfringence. Comme on le verra plus tard, l'élément biréfringent 36 est accordé sur le capteur 20, de telle sorte que la différence de marche optique qu'il produit soit proche de celle produite dans le capteur 20 soumis à la grandeur X à mesurer.

La voie d'analyse correspondant à la sortie du second cube séparateur 34 comprend, en aval de l'élément biréfringent 36, une lame quart d'onde 38 dont les axes sont confondus avec ceux de l'élément biréfringent 36.

Chaque voie sortant de l'élément biréfringent 36 (et de la lame d'onde 38) comprend un cube séparateur de polarisation 40, 42 associé à un autre cube identique 44, 46 respectivement de sorte que les sorties des quatre cubes séparateurs sont parallèles et orientées dans le même sens. Sur chaque sortie est disposée une optique 48 associée à un photodétecteur 50 ayant une surface sensible relativement importante, qui est par exemple de 5 à 10 fois supérieure à celle de l'image de la section de la fibre optique 22 pour éviter tous les petits problèmes de diaphragmation dus à des désalignements et simplifier en conséquence les opérations de réglage. Les photodétecteurs 50 peuvent donc être montés en ligne, par exemple sur une même carte de circuit imprimé et sont reliés à des circuits de lecture 52, eux mêmes reliés par un convertisseur analogique-numérique 54 à des moyens de traitement de l'information 56 comprenant des moyens de calcul.

On va maintenant décrire le fonctionnement de cet appareil.

Lorsqu'une des sources de lumière 10, 12 fonctionne, le flux lumineux qu'elle émet est transmis par la fibre optique 14, le coupleur 16, et la fibre optique 18 au capteur 20 qui est soumis à la grandeur physique à mesurer. L'élément sensible du capteur 20, qui peut être un élément biréfringent ou un interféromètre de Michelson par exemple, pour lesquels la différence de marche est grande devant la longueur de cohérence de la source, produit une modulation spectrale périodique du flux lumineux qu'il reçoit de la source, cette modulation ayant une fréquence qui est une fonction simple de la grandeur physique X à mesurer.

Le flux lumineux ainsi modulé par le capteur 20 est transmis aux moyens d'analyse 24 par la fibre optique 22, arrive sur le premier cube séparateur de polarisation 28 et est donc séparé en deux signaux lumineux polarisés dans des plans perpendiculaires, qui traversent l'élément biréfringent 36. Cet élément biréfringent 36 introduit une différence de marche optique qui est choisie pour être proche de celle introduite par le capteur 20, de telle sorte que l'élément biréfringent 36 produit une modulation spectrale périodique des signaux lumineux qui le traversent, à une fréquence proche de la fréquence de modulation spectrale produite par le capteur 20. L'un des signaux lumineux traversant l'élément biréfringent 36 parvient directement au cube séparateur de polarisation 40 et est partagé par ce cube 40 en deux signaux lumineux polarisés dans des plans perpendiculaires, dont l'un est renvoyé par le cube 44 l'un vers un premier photodétecteur 50 et dont l'autre est transmis par le cube 40 à un second photodétecteur 50.

L'autre signal lumineux traversant l'élément biréfringent 36 passe par la lame quart d'onde 38, puis est séparé en deux signaux polarisés dans des plans perpendiculaires par le cube 42, l'un de ces signaux étant transmis directement à un troisième photodétecteur 50, tandis que l'autre signal est réfléchi par le quatrième cube séparateur 46 vers le quatrième photodétecteur 50.

Les signaux reçus par ces photodétecteurs sont respectivement du type :

$$\text{Io} [1 + m(\phi) \cos \phi] \qquad \text{Io} [1 + m'(\phi) \sin \phi]$$
$$\text{Io} [1 - m(\phi) \cos \phi] \qquad \text{Io} [1 - m'(\phi) \sin \phi]$$

où $m(\phi)$ et $m'(\phi)$ désignent les facteurs de visibilité dûs à la fois à la faible cohérence des sources utilisées et à la qualité des moyens capteurs et détecteurs, $\phi$ est la phase absolue du signal et Io son intensité.

Le choix d'une lame quart d'onde achromatique au niveau de la voie sinus permet de garantir l'égalité des facteurs de visibilité $m(\phi) = m'(\phi)$.

Par amplification différentielle des signaux de sortie des photodétecteurs, on obtient :

$$2\text{Iom}(\phi) \cos \phi \text{ et } 2\text{Iom}'(\phi) \sin \phi$$

4

puis par division :

$$\frac{m'(\phi).\sin\phi}{m(\phi).\cos\phi} = \frac{m'(\phi).\,tg\,\phi}{m(\phi)}$$

ce qui permet d'avoir accès à tg $\phi$, moyennant l'égalité des facteurs de visibilité garantis par l'emploi de la lame achromatique.

On peut ainsi déterminer la phase du signal avec une indétermination d'un multiple de 2 $\pi$, à partir de l'argument de la fonction tangente et des signes des fonctions sinus et cosinus.

On a donc la relation suivante entre la phase absolue du signal et sa valeur modulo 2 $\pi$ :

$\phi = \varphi + 2K\pi$, K étant un entier

La phase absolue $\phi$ est par ailleurs reliée à la valeur de la grandeur X à mesurer par la relation suivante :

$$\phi = 2\pi\frac{\Delta(X) - \Delta o}{\lambda}$$

avec

$\Delta(x)$ = différence de marche optique dans le capteur 20,

$\Delta o$ = différence de marche optique dans l'élément 36,

$\lambda$ = longueur d'onde centrale du flux lumineux émis par la source.

On voit que la connaissance de la phase absolue du signal permet de déterminer la différence de marche optique dans le capteur 20 soumis à la grandeur à mesurer, et donc la valeur de cette grandeur, moyennant un simple étalonnage du capteur 20.

Pour lever l'indétermination de $2k\pi$ et obtenir la phase absolue du signal, on procède de la façon suivante :

on choisit deux sources de lumière 10, 12 émettant sur des longueurs d'onde $\lambda_1$ et $\lambda_2$ qui sont peu différentes l'une de l'autre, de sorte que les phases absolues des signaux correspondants (pour une même valeur de la grandeur physique à mesurer) respectent la condition suivante pour toute une gamme déterminée de valeurs de la grandeur X1 à mesurer :

$$|\Delta\phi| = |\phi_1 - \phi_2| < \pi$$

A partir des équations précitées, on obtient donc :

$$\phi_1 = \varphi_1 + 2k_1\pi$$
$$\phi_2 = \varphi_2 + 2k_2\pi$$
$$\Delta\phi = \Delta\varphi \pm 2\pi$$
$$\text{avec } |k_2 - k_1| \leqq 1$$

Plusieurs cas doivent être alors analysés :

a) $\Delta(x)$ ne présente aucune dépendance spectrale et la dépendance spectrale de $\Delta o$ est supposée négligeable :

$$\phi_1 = \varphi_1 + 2k_1\pi = \frac{2\pi}{\lambda_1}[\Delta(x) - \Delta o]$$

$$\phi_2 = \varphi_2 + 2k_2\pi = \frac{2\pi}{\lambda_2}[\Delta(x) - \Delta o]$$

$$\Delta\phi = \Delta\varphi = \phi_1 - \phi_2$$

$$\Delta\varphi = \frac{2\pi}{\Lambda}[\Delta(x) - \Delta o] \text{ avec } \Lambda = \frac{\lambda_1\lambda_2}{\lambda_1 - \lambda_2}$$

$$2k_1\pi = \frac{2\pi}{\lambda_1} \cdot \frac{\Lambda}{2\pi}\,\Delta\varphi - \varphi_1$$

$$= \frac{\Lambda}{\lambda_1}\,\Delta\varphi - \varphi_1 \implies k_1 = \frac{1}{2\pi}\left[\frac{\Delta\varphi\,\Lambda}{\lambda_1} - \varphi_1\right]$$

de même

$$k_2 = \frac{1}{2\pi}\left[\frac{\Lambda}{\lambda_2}\,\Delta\varphi - \varphi_2\right]$$

b) $\Delta(x)$ et $\Delta o$ présentent des dépendances spectrales non négligeables.

On trace, par calibration ou calcul, la courbe :

$$\Delta\varphi = F(x), \text{ puis on inverse } x = F^{-1}(\Delta\varphi)$$

et à toute valeur de $\Delta\varphi$, on associe une valeur approchée du paramètre X. Cette valeur approchée est utilisée pour déterminer $k_1$ et $k_2$.

Un calcul de vraisemblance permet de vérifier si les différentes valeurs $\varphi_1$, $\varphi_2$, $k_1$, et $k_2$ sont bien compatibles entre elles.

Les fluctuations de $\Delta$ qui sont dues aux imprécisions de mesure ont pour conséquence de donner à $k_1$ et $k_2$ des valeurs qui ne sont pas toujours exactement des nombres entiers. On choisit alors la valeur entière la plus proche du résultat du calcul. Par exemple, si on obtient par le calcul la valeur 5,05 pour $k_1$, on donnera à $k_1$ la valeur entière 5.

On peut donc ainsi calculer la valeur de la phase absolue du signal correspondant au fonctionnement d'une source de lumière 10 ou 12, en déduire la valeur de la différence de marche optique produite dans le capteur, et donc la valeur de la grandeur physique X.

En pratique, l'appareil selon l'invention comprend également le circuit de commande et de calibrage qui est représenté schématiquement en figure 2. Dans cette figure, on remarquera que le capteur 20 travaille en réflexion, tandis qu'il travaille en transmission dans le mode de réalisation de la figure 1. Il s'agit là d'une simple équivalence technique qui ne change ni les fonctions, ni les résultats de l'invention.

Le circuit de commande et de calibrage représenté en figure 2 comprend un coupleur optique 58 du type 50/50 dont les entrées sont reliées par des fibres optiques 14 aux sources de lumière 10 et 12 et dont les deux sorties sont reliées, respectivement à un autre coupleur optique 60 du type 50/50 et à un coupleur optique 62 du type 10/90 par l'intermédiaire d'un obturateur 64. Une sortie du coupleur optique 60 est reliée au capteur 20, par l'intermédiaire d'un obturateur 66 et son autre sortie est reliée à un capteur étalon 68 par l'intermédiaire d'un obturateur 70. La sortie 10 du coupleur optique 62 mène aux moyens d'analyse 24 reliés aux moyens de traitement de l'information 56. Ces moyens 56 comprennent des moyens de commande du fonctionnement des sources de lumière 10, 12 et des obturateurs 64, 66, 70.

De manière générale, les signaux que l'on reçoit sur les détecteurs 50 sont du type suivant :

$$So = Io\,[1 + mo.\,M(\phi)\cos\phi]$$
$$S_1 = I_1\,[1 - m_1.\,M(\phi)\cos\phi]$$
$$S_2 = I_2\,[1 + m_2.\,M(\phi+\varepsilon)\sin(\phi+\varepsilon)]$$
$$S_3 = I_3\,[1 - m_3.\,M(\phi+\varepsilon)\sin(\phi+\varepsilon)]$$

où $M(\phi)$ désigne la visibilité de la modulation due aux effets couplés de la faible cohérence de la source et de la qualité du capteur utilisé, et $\varepsilon$ l'erreur de quadrature résiduelle due au caractère imparfait de la lame $\lambda/4$.

Lorsque l'obturateur 64 est ouvert et que les obturateurs 66 et 70 sont fermés, on a sur les quatre voies d'analyse des signaux non modulés en fréquence, soit :

$Io$, $I_1$, $I_2$ et $I_3$ respectivement.

On calcule alors des coefficients correcteurs :

$$\alpha_1 = Io/I_1\,;\ \alpha_2 = Io/I_2\,;\ \alpha_3 = Io/I_3$$

qui permettent d'égaliser les niveaux de signaux moyens vus par chaque détecteur; on calcule ensuite les différences corrigées suivantes :

$$So - \alpha_1 S_1 = Io\,(mo + \alpha_1 m_1)\,M(\phi)\cos\phi$$
$$\alpha_2 S_2 - \alpha_3 S_3 = Io\,(\alpha_2 m_2 + \alpha_3 m_3)\,M(\phi+\varepsilon)\sin(\phi+\varepsilon)$$

puis le rapport entre ces différences corrigées :

$$R = \frac{\alpha_2 S_2 - \alpha_3 S_3}{So - \alpha_1 S_1} = \frac{(\alpha_2 m_2 + \alpha_3 m_3)}{m_o + \alpha_1 m_1} \cdot \frac{M(\phi+\varepsilon)}{M(\phi)} \cdot \frac{\sin(\phi+\varepsilon)}{\cos\phi}$$

Par fermeture des obturateurs 64 et 66, et ouverture de l'obturateur 70, on peut envoyer aux moyens d'analyse 24 un signal modulé par le capteur étalon 68, et pour lequel la phase $\phi$ résultante est bien connue.

Si la qualité de la lame $\lambda/4$ est convenable (achromatisme et tolérance de déphasage), on a :

$M(\phi+\varepsilon)=M(\phi)$ avec une précision suffisante.

Alors les signaux obtenus sont tels que :

$$R = \frac{\alpha_2 m_2 + \alpha_3 m_3}{mo + \alpha_1 m_1} \times \frac{\sin(\phi+\varepsilon)}{\cos\phi}$$

On supposera d'abord que $\varepsilon = 0$. Dans ces conditions, l'emploi du capteur étalon permet de mesurer le rapport :

$$\frac{\alpha_2 m_2 + \alpha_3 m_3}{mo + \alpha_1 m_1} = \frac{1}{K}$$

et d'en déduire le facteur K de correction de balance. On utilisera désormais les signaux du type

6

$$KR = \frac{\sin(\phi + \varepsilon)}{\cos \phi}$$

($\varepsilon$ étant connu, sa mesure ayant été réalisée une fois pour toutes en usine).

Le circuit de calibrage permet donc de s'affranchir des dérives du système de détection et de recalculer, à intervalles réguliers,

- les coefficients correcteurs de fond continu $\alpha_1$, $\alpha_2$, $\alpha_3$
- le coefficient correcteur de balance K

En outre, si le capteur étalon est constitué de deux éléments distincts commutables séquentiellement et fournissant deux phases $\phi$ et $\phi'$ telles que

$$\phi' = \phi + \pi/2$$

alors la mesure des coefficients corrigés conduit aux signaux suivants :

$$R = \frac{1}{K} \cdot \frac{\sin(\phi + \varepsilon)}{\cos \phi} \text{ et } R' = \frac{1}{K} \cdot \frac{\cos(\phi + \varepsilon)}{\sin \phi}$$

et donc :

$$R = tg\ \phi \cdot tg(\phi + \varepsilon) = tg\ \phi \left( \frac{tg\ \phi + tg\ \varepsilon}{1 - tg\phi tg\varepsilon} \right)$$

ce qui permet, connaissant $\phi$, de calculer $\varepsilon$ indépendamment de la connaissance du facteur correcteur de balance.

Cette erreur de quadrature peut également être déterminée à l'aide d'un capteur étalon du type MICHELSON, dont l'un des miroirs est déplacé en translation avec précision grâce à un mouvement piézoélectrique asservi. L'enregistrement des signaux obtenus après correction et amplification différentielle lors d'un déplacement linéaire supérieur à $\lambda$ permet de mesurer $\varepsilon$ et K et de les utiliser ensuite comme valeurs de calibration "usine" de l'appareil.

Ce capteur étalon peut encore être constitué des éléments suivants :

- un polariseur
- une lame biréfringente compensée analogue à l'élément 36 utilisé dans le système d'analyse (orientée à 45° par rapport à l'analyseur)
- une lame $\lambda/4$ achromatique dont l'un des axes est confondu avec l'analyseur
- un polariseur d'orientation ajustable .

Ce capteur permet de générer des variations de phase contrôlées, puisque la phase apparente du signal varie comme le double de l'orientation angulaire $\beta$ du polariseur tournant.

On peut donc générer une différence de marche correspondant à l'élément biréfringent seul ($\beta=O$) ou y additionner $\pi/2$ ($\beta=\pi$) pour échanger les voies sinus et cosinus et déterminer ainsi $\varepsilon$ et K.

Ensuite, la fermeture des obturateurs 64 et 70 et l'ouverture de l'obturateur 66 permettent des mesures à l'aide du capteur 20.

Il peut également s'avérer nécessaire de calibrer à intervalles réguliers la longueur d'onde centrale effective $\lambda o$ de la source de lumière utilisée, la variation de cette longueur d'onde pouvant être due à:

- un vieillissement de la source,
- une dérive thermique résiduelle de cette même source,
- une modification des propriétés de transmission spectrale de l'ensemble capteur/filtre de liaison/analyseur.

Pour y parvenir, une solution consiste à effectuer deux mesures indépendantes de la phase absolue $\phi$,

- la première avec un démodulateur caractérisé par une différence de marche $\Delta o$ :

$$\phi = \frac{2\pi}{\lambda o} [\Delta(X) - \Delta o]$$

- la seconde avec un démodulateur caractérisé par une différence de marche $\Delta'o$, différente de $\Delta o$ :

$$\phi' = \frac{2\pi}{\lambda o} [\Delta(X) - \Delta'o]$$

La différence entre $\Delta o$ et $\Delta'o$ étant faible, stable et connue avec une valeur comprise entre $\lambda o$ et la variation de la différence de marche dans le capteur lors d'une excursion du paramètre égale à la gamme de mesure.

Pour comparaison des deux valeurs $\phi$ et $\phi'$, il est facile de supprimer l'inconnue $\Delta(X)$ puis d'en déduire $\lambda o$, connaissant l'écart entre $\Delta o$ et $\Delta'o$.

$$\lambda o = \frac{2\pi}{\phi - \phi'} (\Delta'o - \Delta o)$$

Ces mesures peuvent être réalisées pour les deux longueurs d'onde $\lambda_1$ et $\lambda_2$ utilisées dans le système de manière indépendante et permettre ainsi la recalibration périodique de $\lambda_1$ ,$\lambda_2$ et de la longueur d'onde de battement $\Lambda$.

La double détermination de la phase absolue $\phi$ peut être effectuée :
- soit à l'aide de deux systèmes de démodulation fonctionnant en parallèle et caractérisés par des différences de marche $\Delta$o et $\Delta'$o,
- soit en insérant en avant de l'élément 36 une lame biréfringente de faible différence de marche $\delta$ mobile en rotation entre deux positions distantes de 90°, et telle que ses axes lent et rapide soient confondus avec les lignes neutres de l'élément biréfringent 36 dans chacune de ses positions d'utilisation (0°,90°).

Dans ce cas, l'obtention des deux différences de marche pourra être réalisée de manière séquentielle en utilisant les deux positions bistables de la lame de faible biréfringence, avec par exemple :

Position 1 (0°) :$\Delta$o = $\Delta$ + $\delta$

Position 2 (90°) : $\Delta'$o = $\Delta$ - $\delta$

et donc $\Delta$o - $\Delta'$o = 2 $\delta$

Dans la mesure où une telle lame serait présente et utilisée dans le système optique de démodulation, on pourrait l'utiliser en fait sur trois positions stables caractérisées par les angles d'orientation 0,45 et 90° :

Position 1 (0°) $\Delta$o = $\Delta$ + $\delta$

Position 2 (90°) $\Delta$o = $\Delta$ - $\delta$

Position 3 (45°) $\Delta$o = $\Delta$

où $\Delta$ désigne la différence de marche caractéristique de l'élément 36. La position de repos de la lame $\delta$ pourrait être alors choisie en fonction de la différence de marche effective créée par le capteur, tandis que la position de calibration deviendrait alors la position adjacente accessible permettant d'obtenir l'indice de modulation le plus élevé.

Ceci aurait pour effet :
- soit de simplifier la fabrication du capteur en permettant un relachement des tolérances sur la valeur de la différence de marche moyenne qu'il génère,
- soit d'augmenter la plage utile de fonctionnement, en décalant à la demande la fréquence de démodulation de $\pm \delta$.

Pour les mesures, les sources de lumière 10 et 12 sont commandées en succession rapide, par exemple de façon à réaliser en une milliseconde le cycle suivant de quatre mesures : mesure en fonctionnement de la source 10, mesure à l'extinction de la source 10, mesure en fonctionnement de la source 12 et mesure à l'extinction de la source 12. On peut ainsi, par différence, éliminer les bruits de fond et l'influence de la lumière parasite.

Les sources de lumière 10, 12 sont par exemple des diodes électroluminescentes associées à un circuit de régulation thermique, de façon à ce que les longueurs d'onde centrales des rayonnements émis soient insensibles aux variations de température. On peut également utiliser une source à spectre large, telle qu'une lampe à filament ou une lampe à arc, que l'on associe à des filtres interférentiels permettant de prélever les deux longueurs d'ondes voulues dans le spectre émis par la lampe. Un circuit de régulation thermique des filtres interférentiels permet de rendre ces longueurs d'ondes insensibles aux variations de température.

Des diodes électroluminescentes ou superradiantes servant de sources lumineuses peuvent être régulées thermiquement par des éléments Peltier avec une précision de l'ordre de 0,1 °C, ce qui correspond à une précision de l'ordre de 0,03 nm en longueur d'onde. Dans le cas d'une source à spectre large asssociée à des filtres interférentiels, on peut se contenter d'une régulation thermique des filtres interférentiels avec une précision de l'ordre de 1° C, pour obtenir la même précision de 0,03 nm en longueur d'onde.

L'élément biréfringent 36 faisant partie des moyens d'analyse 24 doit également être insensible aux variations de température et avoir une très faible dépendance spectrale. Ces résultats sont obtenus en formant l'élément 36 de deux lames accolées, l'une en KDP (déhydrogénophospate de potassium) (ou éventuellement KD*P, dans lequel les atomes d'hydrogène sont remplacés par des atomes de deutérium), l'autre en calcite (CaCO3). Les axes lents et rapides de ces deux lames sont croisés.

On obtient ainsi une biréfringence assez forte de l'élément 36, qui est par ailleurs parfaitement insensible aux variations thermiques (les sensibilités thermiques des deux lames s'annulant exactement) et qui a une très faible dépendance spectrale (les dépendances spectrales des deux lames s'annulant au moins au premier ordre).

Si e1 désigne l'épaisseur de calcite et e2 celle de KDP, la biréfringence totale de la lame biréfringente 36 s'écrit :

$$B = e_1\Delta n_1 - e_2\Delta n_2$$

La condition d'athermalisation s'écrit en première approximation (dilatation thermique négligeable):

$$\frac{\partial B}{\partial t} = 0 = e_1\frac{\partial \Delta n1}{\partial t} - e2\frac{\partial \Delta\, n_2}{\partial t}$$

et permet de déterminer le rapport des épaisseurs k

$$k = e_2/\,e_1 = \frac{\partial \Delta n1/\,\partial t}{\partial \Delta n2/\,\partial t} = 0,973 \text{ à } \lambda = 830 \text{ nm}$$

auquel doit satisfaire le couple KDP/ Calcite (la biréfringence résultante n'étant pas nulle).

En outre, l'épaisseur exacte de chaque lame est déterminée par la condition d'accord en milieu de gamme du paramètre X.

Soit Xo cette valeur et $\Delta c$ (Xo, $\lambda$) la différence de marche associée dans le capteur; la condition d'accord s'écrit alors

$$\Delta (\lambda\ o)\ -\ \lambda o\ \frac{\partial\, \Delta}{\partial\, \lambda}\ \bigg|\ {}_{\lambda\ =\ \lambda o}\qquad = 0$$

avec

$$\Delta(\lambda) = \Delta c\ (Xo,\lambda)\ -\ \Delta o\ (\lambda)$$

$\lambda o$ étant la longueur d'onde centrale de la source.

Ceci permet de calculer $\Delta o$ et d'en déduire les valeurs exactes des deux lames de KDP et de calcite correspondant au capteur considéré.

Avec la valeur de K retenue, on peut en outre montrer que la dépendance spectrale relative de la lame 36 est très faible : $\frac{1}{B} \cdot \frac{\partial B}{\partial \lambda} < < 1$ pour k $= 0,973$.

Par ailleurs, la lame quart d'onde 38 placée derrière l'élément biréfringent 36 doit être achromatique pour que les fonctions sinus et cosinus puissent être mesurées au même point de l'enveloppe du signal lumineux, ce qui garantit une grande précision de mesure et une excellente linéarité sur toute la gamme de différences de marche.

Pour cela, il faut que la condition d'accord exprimée plus haut soit satisfaite sur les deux voies pour la même valeur de la différence de marche dans le capteur.

Pour la voie cosinus, nous avons :

$$\Delta c\ (Xo,\ \lambda o)\ -\ \lambda o\frac{\partial \Delta c}{\partial \lambda}\ (Xo,\lambda o)\ -\ \Delta o\ (\lambda o)\ +\ \lambda o\ \frac{\partial \Delta}{\partial \lambda}\ (\lambda o) = 0$$

Pour la voie sinus :

$$\Delta c\ (Xo,\lambda o)\ -\ \lambda o\frac{\partial \Delta}{\partial \lambda}\ C\ (Xo,\lambda o)\ -\ \Delta o(\lambda o) - \delta(\lambda o)\ +\ \lambda\ o\frac{\partial \Delta}{\partial \lambda}\ (\lambda o)\ +\ \lambda o\frac{\partial \delta}{\partial \lambda}\ (\lambda o) = 0$$

où $\delta$ ($\lambda$) désigne la différence de marche associée à la lame $\lambda/4$ soit encore :

$$\lambda o\ \frac{d\delta}{d\lambda} = \delta\ (\lambda o) \Rightarrow \delta(\lambda o) = k\lambda o$$

et

$$\delta(\lambda o) = \frac{\pi}{2}\ x\ \frac{\lambda o}{2\pi} = \frac{\lambda o}{4} \Rightarrow k = 1/4$$

$$\Delta\ (\lambda) = \lambda/4 \text{ pour tout } \lambda$$

ce qui caractérise bien une lame achromatique quart d'onde.

Comme on l'a représenté schématiquement en figure 1, on peut interposer un élément polarisant 72 entre l'optique d'entrée 26 des moyens d'analyse et le premier cube séparateur 28, lorsque la fibre optique 22 est une fibre multimode ayant une longueur relativement faible. En effet, lorsque le capteur 20 est du type polarisant et que sa liaison aux moyens d'analyse 24 est de l'ordre de quelques mètres, il peut rester dans le signal lumineux transmis aux moyens d'analyse 24 un résidu de polarisation, qui va influencer les séparations réalisées par le cube 28. L'élément polarisant 72 orienté à 45° du premier cube 28, va permettre d'équilibrer les deux voies d'analyse et de stabiliser parfaitement le rapport de leurs intensités, quel que soit l'état de polarisation du signal à analyser.

Lorsque la liaison entre le capteur 20 et les moyens d'analyse 24 est réalisée par une fibre optique multimode de grande longueur, la lumière est complètement dépolarisée lorsqu'elle parvient aux moyens d'analyse 24 et l'élément polarisant 72 est alors inutile (ce qui correspond à un gain de 3dB),

L'appareil selon l'invention présente les avantages essentiels suivants :

- un seul élément biréfringent 36 pour les deux voies d'analyse
- pas de perte de flux (on utilise les deux états de polarisation du flux lumineux)

- faible encombrement (les moyens d'analyse avec les moyens d'acquisition, de démultiplexage électronique et de conversion analogique-numérique peuvent être logés dans un boîtier ayant des dimensions de l'ordre de 2 x 10 x 5 cm3),

- très grande précision (on obtient une résolution de 200 000 points dans le cas où l'on n'utilise qu'un seul capteur, ce qui correspond à une précision de l'ordre du millième de degré Celsius en température et du vingt millième de la longueur d'onde en déphasage),

- capacité de multiplexage importante (plus de 10 capteurs).

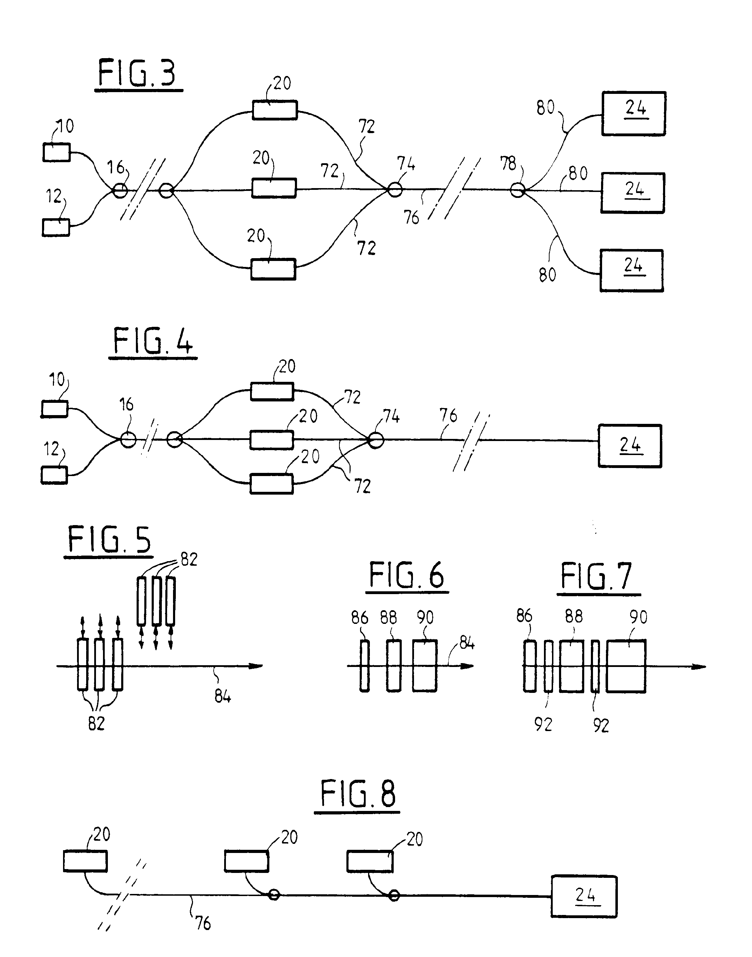

Divers modes de multiplexage sont représentés dans les figures 3, 4 et 8.

En figure 3, plusieurs capteurs 20 sont reliés par des fibres optiques 72 à un coupleur optique 74 relié par une fibre optique 76 à un autre coupleur optique 78 de même type. Les moyens de détection 24, en nombre égal à celui des capteurs 20 sont reliés par des fibres optiques 80 au coupleur optique 78. Chaque moyen de détection 24 associé à un capteur 20 comprend un élément biréfringent accordé sur le capteur 20 correspondant.

Dans le mode de réalisation de la figure 4, plusieurs capteurs 20 sont reliés par des fibres optiques 72 à un coupleur optique 74 relié par une fibre optique 76 aux moyens de détection 24. Dans ce cas, ces derniers comprennent un ensemble d'éléments biréfringents du même type que la lame composite 36, que l'on peut accorder successivement sur chaque capteur 20.

Plusieurs variantes de réalisation sont envisageables pour cette fonction :

a) lames biréfringentes de type 36 adaptées à chaque capteur et que l'on peut amener sur (ou retirer de) la trajectoire du faisceau lumineux par des mouvements de translation (par exemple au moyen de glissières) ou de rotation (type roue à filtres).

b) en variante (figure 5), les différences de marche associées à chaque capteur peuvent être générées par l'addition arithmétique des biréfringences de lames 82 de nature et d'épaisseurs identiques, ces lames étant amenées sur (ou retirées de) la trajectoire du faisceau lumineux 84 par des mouvements de translation, par exemple sur des glissières.

c) en variante (figure 6), les différences de marche associées à chaque capteur peuvent être générées par l'addition algébrique des biréfringences de lames 86, 88, 90,... de nature identique et d'épaisseurs croissantes, ces lames étant mobiles en rotation autour de l'axe 84 du faisceau et caractérisées par deux positions stables séparées de 90°, les axes lents ou rapides des lames étant constamment alignés, la rotation d'une lame permettant d'additionner ou de soustraire sa biréfringence à celle de l'ensemble des autres lames (échange des axes lents et rapides).

d) en variante (figure 7), les différences de marche associées à chaque capteur peuvent être générées par l'addition algébrique des biréfringences de lames 86, 88, 90 d'épaisseurs croissantes, ces opérations d'addition ou de soustraction étant induites par la commande électrique de lames demi-ondes intercalaires 92, dont les axes sont situés à 45° de ceux des éléments d'accord.

Ces lames intercalaires 92 sont constituées par des matériaux de type élasto-optique, électro-optique ou autre dont la biréfringence prend la valeur 0 ou $\lambda/2$ suivant la valeur de la consigne de commande.

On peut également, comme représenté schématiquement en figure 8, réaliser un multiplexage dans le temps des signaux provenant de capteurs 20 raccordés à une même ligne optique 76 aboutissant aux moyens d'analyse 24. Dans ce cas, les impulsions délivrées par chaque source doivent être suffisamment brèves pour que les distances séparant les capteurs ou les groupes de capteurs suffisent à différencier dans le temps les signaux provenant des différents capteurs ou des différents groupes de capteurs. Le traitement des informations provenant de chaque capteur est alors identique à celui décrit dans ce qui précède, mais pour des informations délivrées en synchronisme par les divers capteurs durant l'intervalle de mesure défini par la durée de l'impulsion lumineuse envoyée dans la ligne 76.

L'identification des capteurs peut alors être de nature purement temporelle.

Cette méthode de multiplexage peut être utilisée en combinaison avec celles décrites précédemment dans le cas d'une mesure en continu.

L'invention permet des mesures de grandeurs physiques à des distances relativement importantes, par exemple de 3 km ou davantage, sans influence de la ligne de transmission, avec des précisions élévées : une résolution de 200 000 points dans le cas où l'on n'utilise qu'un seul capteur, ou de 1000 points si l'on utilise huit capteurs branchés sur la même ligne de transmission.

## Revendications

1. Appareil opto-électronique de mesure à distance d'une grandeur physique, comprenant une source de lumière (10, 12), un capteur (20) soumis à la grandeur physique à mesurer et réalisant une modulation spectrale périodique du flux lumineux reçu de la source, à une fréquence fonction de la grandeur physique (X) à mesurer, et des moyens (24) d'analyse du flux lumineux transmis par le capteur (20), ces moyens d'analyse comportant un élément biréfringent (36) accordé sur le capteur (20) et produisant une différence de marche optique proche de celle produite par le capteur, caractérisé en ce que les moyens d'analyse (24) sont du type statique et comprennent des cubes séparateurs de polarisation (28, 40, 42) associés à des photodétecteurs (50), et des moyens de traitement de l'information reliés aux photodétecteurs (50) pour le calcul et la détermination de la phase modulo $2\pi$ du signal lumineux transmis par l'élément biréfringent (36) des moyens d'analyse, et en ce que l'appareil comprend deux sources de lumière (10, 12) émettant des flux lumineux centrés sur deux longueurs d'onde différentes, et des moyens de commande de fonctionnement alterné de ces sources de lumière (10, 12), la différence des longueurs d'ondes centrales des deux sources de lumière étant telle que la valeur absolue de la différence des phases des signaux transmis par l'élément biréfringent (36) reste inférieure à $\pi$ pour une gamme déterminée de valeurs de la grandeur physique (X) à mesurer.

2. Appareil selon la revendication 1, caractérisé en ce que les moyens d'analyse (24) comprennent successivement, par rapport au sens de propagation du flux lumineux transmis par le capteur (20), un premier cube séparateur de polarisation (28) transmettant sur deux voies d'analyse deux signaux lumineux polarisés dans des plans perpendiculaires ; l'élément biréfringent (36) précité, qui est placé sur les deux voies d'analyse; une lame quart d'onde (38) placée sur une seule des voies d'analyse; deux cubes séparateurs de polarisation (40, 42), placés chacun sur une voie d'analyse; et quatre photodétecteurs (50) placés chacun sur une des sorties de ces cubes séparateurs (40, 42).

3. Appareil selon la revendication 2, caractérisé en ce que chaque cube séparateur (28, 40, 42) précité est associé à un second cube séparateur (34, 44, 46) placé sur l'une de ses sorties de telle sorte que les flux lumineux sortant l'un directement du premier cube séparateur, et l'autre du second cube séparateur, sont parallèles et orientés dans le même sens.

4. Appareil selon la revendication 3, caractérisé en ce que les quatre photodétecteurs (50) sont placés sur une même ligne.

5. Appareil selon l'une des revendications 2 à 4, caractérisé en ce que la lame quart d'onde (38) précitée est achromatique.

6. Appareil selon l'une des revendications précédentes, caractérisé en ce que l'élément biréfringent (36) est insensible aux variations de température et a une très faible dépendance spectrale.

7. Appareil selon la revendication 7, caractérisé en ce que l'élément biréfrigent (36) est formé de deux lames accolées, dont les axes lents et rapides sont croisés.

8. Appareil selon la revendication 7, caractérisé en ce que les lames accolées sont en KDP et en calcite respectivement.

9. Appareil selon l'une des revendications précédentes, caractérisé en ce que les sources de lumière (10, 12) sont des diodes électroluminescentes ou superluminescentes, associées à des circuits de régulation thermique.

10. Appareil selon l'une des revendications 1 à 8, caractérisé en ce que les sources de lumière comprennent une source lumineuse commune à spectre large, par exemple une lampe à filament ou à arc, et des filtres interférentiels pour la transmission de deux longueurs d'onde prédéterminées, qui sont associés à un circuit de régulation thermique.

11. Appareil selon l'une des revendications précédentes, caractérisé en ce que les circuits de commande des sources de lumière (10, 12) sont conçus pour réaliser des cycles de quatre mesures (une mesure à l'allumage et une mesure à l'extinction de chaque source de lumière) à une fréquence d'environ 1 kHz par exemple.

12. Appareil selon l'une des revendications précédentes, caractérisé en ce que le capteur (20) est relié aux moyens d'analyse (24) par une fibre optique multimode à la sortie de laquelle est prévu un élément polarisant (72) orienté à 45° du premier cube séparateur de polarisation (28) des moyens d'analyse (24).

13. Appareil selon l'une des revendications précédentes, caractérisé en ce qu'il comprend un circuit de calibrage, comprenant une voie de liaison directe entre les sources de lumière (10, 12) et les moyens d'analyse (24), une voie de liaison entre un capteur étalon (68) et les moyens d'analyse (24), et des obturateurs (64, 70, 66) montés sur ces deux voies et sur la voie de mesure allant du capteur de mesure (20) aux moyens d'analyse (24).

14. Appareil selon la revendication 13, caractérisé en ce que le capteur étalon du circuit de calibrage est propre à générer séquentiellement des signaux ayant une différence de phase de π/2, et comprend par exemple un polariseur tournant à orientation angulaire commandée.

15. Appareil selon l'une des revendications précédentes, caractérisé en ce qu'il comprend des moyens de calibrage de la longueur d'onde centrale de chaque source de lumière (10, 12), ces moyens comprenant des éléments biréfringents (36) agencés en parallèle et générant des différences de marche Δo et Δ'o voisines, ou bien une lame biréfringente à faible différence de marche associée à l'élément (36) et mobile en rotation entre des positions déterminées.

16. Appareil selon l'une des revendications précédentes, caractérisé en ce qu'il comprend plusieurs capteurs (20) montés en parallèle et ayant des fréquences différentes de modulation spectrale, et autant de moyens d'analyse (24) montés en parallèle et comprenant chacun un élément biréfringent (36) accordé sur le capteur correspondant, ces capteurs étant reliés aux moyens d'analyse par une même fibre optique (76) et des coupleurs optiques (74, 78).

17. Appareil selon l'une des revendications 1 à 15, caractérisé en ce qu'il comprend plusieurs capteurs (20) montés en parallèle et ayant des fréquences différentes de modulation spectrale, reliés à des moyens communs d'analyse (24) par un coupleur optique (74) et une fibre optique commune (76), ces moyens d'analyse comprenant un ensemble d'éléments biréfringents qui est susceptible d'être accordé successivement sur chaque capteur (20).

18. Appareil selon l'une des revendications 1 à 15, caractérisé en ce que les moyens d'analyse (24) sont reliés par une fibre optique (76) à des capteurs (20) éloignés les uns des autres de distances telles que l'on puisse séparer dans le temps les signaux provenant de ces capteurs durant les intervalles de mesure définis par la durée d'impulsions lumineuses émises par les sources de lumière (10, 12).

**Patentansprüche**

1. Opto-elektronisches Gerät zum Messen einer physikalischen Göße aus der Entfernung, das eine Lichtquelle (10, 12), einen der zu messenden physikalischen Größe ausgesetzten Sensor (20), der eine periodische spektrale Modulation des von der Quelle empfangenen Lichtflusses mit einer Frequenz bewirkt, die von der physikalischen Größe (X) abhängig ist, und Mittel (24) zur spektralen Analyse des von dem Sensor (20) übermittelten Lichtflusses aufweist, wobei die Analysemittel ein doppelbrechendes Element (36) aufweisen, das auf den Sensor (20) abgestimmt ist und einen optischen Gangunterschied erzeugt, der jenem nahekommt, der von dem Sensor erzeugt wird, dadurch gekennzeichnet, daß die Analysemittel (24) statisch sind und polarisierende Strahlteilerwürfel (28, 40, 42), die den Photodetektoren (50) zugeordnet sind, und Mittel zur Informationsverarbeitung aufweisen, die mit den Photodetektoren (50) zur Berechnung und Bestimmung des Phasenmodulus 2π des Lichtsignales verbunden sind, das von dem doppelbrechenden Element (36) der Analysemittel transmittiert wird, und daß das Gerät zwei Lichtquellen (10, 12), welche Lichtflüsse aussenden, die an zwei unterschiedlichen Wellenlängen liegen, und Mittel zur Steuerung eines alternierenden Betriebes dieser Lichtquellen (10, 12) aufweist, wobei die Differenz der Wellenlängen der beiden Lichtflüsse so ist, daß der Absolutwert der Phasendifferenz der von dem doppelbrechenden Element (36) übermittelten Signale für einen vorbestimmten Wellenlängenbereich von Werten der zu messenden physikalischen Größe (X) unterhalb von π liegt.

2. Gerät nach Anspruch 1, dadurch gekennzeichnet, daß die Analysemittel (24) bezüglich der Ausbreitungsrichtung des von dem Sensor (20) übermittelten Lichtflusses aufeinanderfolgend aufweisen: einen ersten polarisierenden Strahlteilerwürfel (28), der in zwei Analysepfaden von zwei normal zueinander polarisierten Signalen durchstrahlt wird, das vorgenannte doppelbrechende Element (36), das in den beiden Analysepfaden angeordnet ist, ein Lambda/Viertel-Plättchen (38), das in einem der Analysepfade angeordnet ist, zwei polarisierende Strahlteilerwürfel (40, 42), von denen jeder in einem Analysepfad angeordnet ist, und vier Photodetektoren (50) aufweist, von denen jeder an einem der Ausgänge dieser Strahlteilerwürfel (40, 42) angeordnet ist.

3. Gerät nach Anspruch 2, dadurch gekennzeichnet, daß jedem Strahlteilewürfel (28, 40, 42) ein zweiter Strahlteilerwürfel (34, 44, 46) zugeordnet ist, welcher mit einem seiner Ausgänge so angeordnet ist, daß die Lichtflüsse, von denen einer direkt aus dem ersten Strahlteilerwürfel und der andere aus dem zweiten Strahlteilerwürfel austritt, parallel sind und dieselbe Orientierung besitzen.

4. Gerät nach Anspruch 3, dadurch gekennzeichnet, daß die vier Photodetektoren (50) in einer Linie angeordnet sind.

5. Gerät nach einem der Ansprüche 2 bis 4, dadurch gekennzeichnet, daß das Lambda/Viertel-Plättchen (38) achromatisch ist.

6. Verfahren nach einem der vorigen Ansprüche, dadurch gekennzeichnet, daß das doppelbrechende Element (36) auf Temperaturänderungen unempfindlich ist und eine sehr geringe Dispersion besitzt.

7. Gerät nach Anspruch 6, dadurch gekennzeichnet, daß das doppelbrechende Element (36) aus zwei zusammengefügten Schichten besteht, deren ordentliche Achsen und außerordentliche Achsen gekreuzt sind.

8. Gerät nach Anspruch 7, dadurch gekennzeichnet, daß die zusammengefügten Schichten aus KDP beziehungsweise aus Kalzit bestehen.

9. Gerät nach einem der vorigen Ansprüche, dadurch gekennzeichnet, daß die Lichtquellen (10, 12) elektroluminiszierende oder super-luminiszierende Dioden sind, die einem thermischen Regelkreis zugeordnet sind.

10. Gerät nach einem der Ansprüche 1 bis 8, dadurch gekennzeichnet, daß die Lichtquellen eine gemeinsame breitbandige Lichtquelle, wie beispielsweise eine Faden- oder Bogenlampe, und einem thermischen Regelkreis zugeordnete Interferenzfilter zur Transmission zweier unterschiedlicher, vorbestimmter Wellenlängen aufweisen.

11. Gerät nach einem der vorigen Ansprüche, dadurch gekennzeichnet, daß die Steuerschaltungen der Lichtquellen (10, 12) zum Ausführen von vier Messungen (mit jeder Lichtquelle eine Messung bei Beleuchtung und eine Extinktionsmessung) bei einer Frequenz zum Beispiel von ungefähr 1 kHz vorgesehen sind.

12. Gerät nach einem der vorigen Ansprüche, dadurch gekennzeichnet, daß der Sensor (20) an dem Ausgang, der mit einem Polarisatorelement (72) versehen ist, das unter 45° zu dem polarisierenden Strahlteilerwürfel (28) der Analysemittel (24) ausgerichtet ist, mittels einer optischen Vielfachmodus-Faser mit den Analysemitteln (24) verbunden ist.

13. Gerät nach einem der vorigen Ansprüche, dadurch gekennzeichnet, daß es eine Kalibrierschaltung enthält, die einen direkten Verbindungspfad zwischen den Lichtquellen (10, 12) und den Analysemitteln (24), einen Verbindungspfad zwischen dem Eichsensor (68) und den Analysemitteln (24) und Blenden (64, 70, 66) aufweist, die in diesen zwei Pfaden und in dem Meßpfad angebracht sind, der vom Meßsensor (20) zu den Analysemitteln (24) führt.

14. Gerät nach Anspruch 13, dadurch gekennzeichnet, daß der Eichsensor der Kalibrierschaltung dazu geeignet ist, sequentiell Signale mit einer Phasendifferenz von p/2 zu erzeugen und beispielsweise einen Polarisator aufweist, der in eine vorgegebene Winkelposition gedreht wird.

15. Gerät nach einem der vorigen Ansprüche, dadurch gekennzeichnet, daß es Mittel zur Kalibrierung der Wellenlänge jeder Lichtquelle (10, 12) aufweist, wobei diese Mittel doppelbrechende Elemente (36), die parallel angeordnet sind und unterschiedliche benachbarte Gangunterschiede $\Delta$o und $\Delta$'o erzeugen, oder eine doppelbrechende Schicht mit geringem Gangunterschied aufweisen, die dem Element (36) zugeordnet ist und zwischen vorbestimmten Positionen gedreht werden kann.

16. Gerät nach einem der vorigen Ansprüche, dadurch gekennzeichnet, daß es mehrere Sensoren (20), die parallel angeordnet sind und unterschiedliche spektrale Modulationsfrequenzen besitzen, und genauso-

EP 0 428 702 B1

viele parallel angeordnete Analysemittel (24) enthält, von denen jedes ein doppelbrechendes Element (36) aufweist, das auf den entsprechenden Sensor abgestimmt ist, wobei diese Sensoren mittels derselben optischen Faser (76) und den optischen Kopplern (74, 78) mit den Analysemitteln verbunden sind.

17. Gerät nach einem der Ansprüche 1 bis 15, dadurch gekennzeichnet, daß es mehrere Sensoren (20) aufweist, die parallel angeordnet sind und unterschiedliche spektrale Modulationsfrequenzen besitzen, und die mittels eines optischen Kopplers (74) und einer gemeinsamen optischen Faser (76) mit den gemeinsamen Analysemitteln (24) verbunden sind, wobei diese Analysemittel eine Anordnung von doppelbrechenden Elementen enthalten, die sukzessiv auf jeden Sensor (20) abgestimmt werden können.

18. Gerät nach einem der Ansprüche 1 bis 15, dadurch gekennzeichnet, daß die Analysemittel (24) mittels einer optischen Faser (76) mit den Sensoren (20) verbunden sind, die voneinander um solche Abstände entfernt sind, daß die Signale, die von den Sensoren herrühren und über das Meßintervall andauern, zeitlich getrennt werden können, wobei das Meßintervall durch die Dauer der von den Lichtquellen (10, 12) ausgesandten Lichtimpulse festgelegt wird.


## Claims

1. Optoelectronic apparatus for the remote measuring of a physical size, comprising a light source (10, 12), a sensor (20) subjected to the physical size to be measured and causing periodic spectral modulation of the luminous flux received from the source, at a frequency depending on the physical size (X) to be measured and means (24) for analysing the luminous flux transmitted by the sensor (20), these analysis means comprising a birefringent element (36) tuned to the sensor (20) and producing an optical difference of path close to that produced by the sensor, characterized in that the analysis means (24) are of the static type and comprise polarization separating cubes (28, 40, 42) associated with photodetectors (50) and data processing means connected to the photodetectors for computing and determining the modulo $2\pi$ phase of the light signal transmitted by the birefringent element (36) of the analysis means, and in that the apparatus comprises two light sources (10, 12) emitting luminous fluxes centred on two different wavelengths, and means for controlling the alternate operation of these light sources (10, 12), the difference of the central wavelengths of the two light sources being such that the absolute value of the difference of the phases of the signals transmitted by the birefringent element (36) remains less than $\pi$ for a given range of values of the physical size (X) to be measured.

2. Apparatus according to claim 1, characterized in that the analysis means (24) comprise successively, with respect to the direction of propagation of the luminous flux transmitted by the sensor (20), a first polarization separating cube (28) transmitting over two analysis channels two light signals polarized in perpendicular planes; said birefringent element (36), which is placed on the two analysis channels; a quarter-wave plate (38) placed on one only of the analysis channels; two polarization separating cubes (40, 42) each placed on an analysis channel; and four photodetectors (50), each placed at one of the outputs of these separating cubes (40, 42).

3. Apparatus according to claim 2, characterized in that each said separating cube (28, 40, 42) is associated with a second separating cube (34, 44, 46), placed at one of its outputs, so that the luminous fluxes, one of which leaves the first separating cube directly and the other the second separating cube, are parallel and oriented in the same direction.

4. Apparatus according to claim 3, characterized in that the four photodetectors are placed on the same line.

5. Apparatus according to one of claims 2 to 4, characterized in that said quarter-wave plate (38) is achromatic.

6. Apparatus according to one of the preceding claims, characterized in that the birefringent element (36) is insensitive to temperature variations and has a very low spectral dependence.

7. Apparatus according to claim 7, characterized in that the birefringent element (36) is formed of two plates coupled side by side, whose slow and fast axes are crossed.

8. Apparatus according to claim 7, characterized in that the coupled plates are formed of KDP and calcite

14

respectively.

9. Apparatus according to one of the preceding claims, characterized in that the light sources (10, 12) are light-emitting diodes or super light-emitting diodes associated with thermal regulation circuits.

10. Apparatus according to one of claims 1 to 8, characterized in that the light sources comprise a common light source with wide spectrum, for example a filament lamp or an arc lamp, and interferential filters for the transmission of two predetermined wavelengths which are associated with a thermal regulation circuit.

11. Apparatus according to one of the preceding claims, characterized in that the circuits for controlling the light sources (10, 12) are designed for providing cycles of four measurements (a measurement on switching on and a measurement on switching off each light source) at a frequency of about 1 kHz for example.

12. Apparatus according to one of the preceding claims, characterized in that the sensor (20) is connected to the analysis means (24) by a multimode optical fibre at the output of which is provided a polarizing element (72) oriented at 45° from the first polarization separating cube (28) of the analysis means (24).

13. Apparatus according to one of the preceding claims, characterized in that it comprises a calibration circuit, having a direct connecting channel between the light sources (10, 12) and the analysis means (24), a connecting channel between a calibration sensor (68) and the analysis means (24) and obturators (64, 70, 66) mounted in these two channels and in the measuring channel going from the measurement sensor (20) to the analysis means (24).

14. Apparatus according to claim 13, characterized in that the calibration sensor of the calibration circuit is adapted for generating sequentially signals having a phase difference of $\pi/2$, and comprises for example a rotating polarizer with controlled angular orientation.

15. Apparatus according to one of the preceding claims, characterized in that it comprises means for calibrating the central wavelength of each light source (10, 12), these means comprising birefringent elements (36) arranged in parallel and generating closely related differences of path ($\Delta$o and $\Delta'$o) or else a birefringent plate with low difference of path associated with the element (36) and rotatable between given positions.

16. Apparatus according to one of the preceding claims, characterized in that it comprises several sensors (20) mounted in parallel and having different frequencies of spectral modulation and as many analysis means (24) mounted in parallel and each comprising a birefringent element (36) tuned to the corresponding sensor, these sensors being connected to the analysis means by the same optical fibre (76) and optical couplers (74, 78).

17. Apparatus according to one of claims 1 to 15, characterized in that it comprises several sensors (20) having different spectral modulation frequencies and mounted in parallel and connected to common analysis means (24) by an optical coupler (74) and a common optical fibre (76), these analysis means comprising a set of birefringent elements which can be tuned to each sensor (20) successively.

18. Apparatus according to one of claims 1 to 15, characterized in that the analysis means (24) are connected by an optical fibre (76) to sensors (20) which are remote from each other by distances such that the signals from these sensors may be separated in time during the measurement intervals defined by the light pulse widths emitted by the light sources (10, 12).

## FIG.1

## FIG.2

FIG.3

FIG.4

FIG.5

FIG.6

FIG.7

FIG.8